# EUROPEAN PATENT APPLICATION

(11) **EP 3 912 458 A1**
(43) Date of publication of application: **24.11.2021**
(21) Application number: 21172253.3
(22) Date of filing: 05.05.2021
(51) Int. Cl.: A01G 9/029, B65D 85/52, A01G 9/02

(54) **A PLANT CULTIVATION POT**

(30) Priority: 19.05.2020 FI 20205504
(71) Applicant: Bionido Oy, 53200 Lappeenranta (FI)
(72) Inventor: JERNSTRÖM, Eeva, 53200 LAPPEENRANTA (FI); VARIS, Juha, 53100 LAPPEENRANTA (FI)
(74) Representative: Väänänen, Janne Kalervo

(57) **Abstract**

A plant cultivation pot (100) comprises a first paper fiber board (101) constituting a wall portion (102) of the plant cultivation pot and a second paper fiber board (103) constituting a bottom portion (104) of the plant cultivation pot. The plant cultivation pot comprises a plinth portion (105) so that a part of the wall portion is below the bottom portion in the height direction of the plant cultivation pot. An outline of a lower edge of the first paper fiber board constituting the plinth portion is provided with cuts (107b) extending towards an upper rim of the plant cultivation pot. Thus, the cuts form openings in the wall portion through which roots of a plant can grow out from the plant cultivation pot.

## Description

### Technical field

The disclosure relates to a plant cultivation pot suitable for cultivating plants. Furthermore, the disclosure relates to a cultivation system and to a method for cultivating a plant.

### Background

Many plants are grown in plant cultivation pots which contain cultivation medium such as e.g. mold or turf. In many cultivation processes, the plants are first irrigated from above until root systems of the plants have developed sufficiently to receive water and nutrients from below via for example holes in the plant cultivation pots. The plant cultivation pots can be placed for example on a bottom of a gutter in which water and/or nutrition solution is arranged to flow. The plant cultivation pots are often made of plastic, rock wool, or other non-renewable material, and thus the plant cultivation pots must be disposed of or stored for re-use after a cultivation process.

Nowadays there is a great endeavor to reduce amount of plastics and/or other non-renewable materials used in cultivation processes of the kind mentioned above. Publication WO9403044 describes a plant cultivation pot constructed from paper fiber board having a high wet strength. The paper fiber board is formed from chemically recovered, virgin wood fibers that provide the required wet strength while enabling the plant cultivation pot to be fully biodegradable and recyclable. The plant cultivation pot described in WO9403044 is however unsuitable for many automatized cultivation processes because the plant cultivation pot does not comprise, at an opening of the plant cultivation pot, an extension that enables a handling machine to pick one plant cultivation pot from a pile of stacked plant cultivation pots. Furthermore, the plant cultivation pot described in WO9403044 does not comprise means for arranging a sufficient distance between upper rims of adjacent plant cultivation pots in a pile of stacked plant cultivation pots. The distance is needed for enabling the handling machine to pick one plant cultivation pot from the pile of stacked plant cultivation pots.

Plant cultivation pots are typically provided with holes for allowing roots of plants to reach out from the plant cultivation pots. In many cases, there are holes in a bottom and/or a lower portion of a wall of a plant cultivation pot. An inconvenience related to plant cultivation pots made of paper fiber board is that making holes results in loose waste pieces that need to be moved away from a machinery for manufacturing the plant cultivation pots.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In this document, the word "geometric" when used as a prefix means a geometric concept that is not necessarily a part of any physical object. The geometric concept can be for example a geometric point, a straight or curved geometric line, a planar or non-planar geometric surface, a geometric space, or any other geometric entity that is zero, one, two, or three dimensional.

In accordance with the invention, there is provided a new plant cultivation pot that comprises a first paper fiber board constituting a wall portion of the plant cultivation pot and a second paper fiber board constituting a bottom portion of the plant cultivation pot, wherein the plant cultivation pot comprises a plinth portion so that a part of the wall portion is below the bottom portion in the height direction of the plant cultivation pot. An outline of a lower edge of the first paper fiber board is provided with cuts extending towards an upper rim of the plant cultivation pot.

As the outline of the lower edge of the first paper fiber board is arranged to have the cuts of the kind mentioned above, there is no need to make holes to the first paper fiber board. Thus, amount of loose waste pieces resulting in a manufacturing process of the plant cultivation pot can be reduced.

In this document the word "paper fiber board" can mean cardboard, carton, paper, or any organic fiber based flat material that is suitable for constructing a plant cultivation pot of the kind described above.

The material or materials of the first and second paper fiber boards is/are advantageously selected so the plant cultivation pot does not need to be disposed of after the cultivation process, but the plant cultivation pot decomposes and can be mixed with the cultivation medium such as e.g. turf of mold or to a field if the seedings are further grown on a field e.g. on an open air field. Advantageously, the decomposed material of the plant cultivation pot can act as soil improvement material to improve soil structure and/or withhold nutrients.

In accordance with the invention, there is provided also a new cultivation system that comprises:
- a plant cultivation pot according to the invention,
- cultivation medium in the interior of the plant cultivation pot, and
- a plant rooted on the cultivation medium.

The cultivation medium can be for example mold or turf, and the plant can be for example a lettuce. Cultivation systems according to the invention are not limited to any specific plants and/or cultivation mediums.

In accordance with the invention, there is provided also a new method for cultivating a plant. The method comprises:
- filling at least a part of an interior room of a plant cultivation pot according to the invention with cultivation medium,
- cultivating the plant on the cultivation medium so that the cultivation medium is irrigated from above, and subsequently
- cultivating the plant on the cultivation medium so that water and nutrients are supplied to roots of the plant from below.

In a method according to an exemplifying and advantageous embodiment, the plant cultivation pot is not disposed of after the plant has been cultivated, but the plant cultivation pot is mixed with the cultivation medium to decompose. In a method according to an exemplifying and advantageous embodiment, the decomposed material of the plant cultivation pot acts as soil improvement material to improve soil structure and/or withhold nutrients.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### Brief description of figures

Exemplifying and non-limiting embodiments and their advantages are explained in greater detail below in the sense of examples and with reference to the accompanying drawings, in which:
figures 1a, 1b, 1c, and 1d illustrate a plant cultivation pot according to an exemplifying and non-limiting embodiment,
figure 2 illustrates a part of a plant cultivation pot according to an exemplifying and non-limiting embodiment,
figure 3 illustrates a plant cultivation pot according to an exemplifying and non-limiting embodiment,
figures 4a and 4b illustrate a cultivation system according to an exemplifying and non-limiting embodiment, and
figure 5 shows a flowchart of a method according to an exemplifying and non-limiting embodiment for cultivating a plant.

### Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

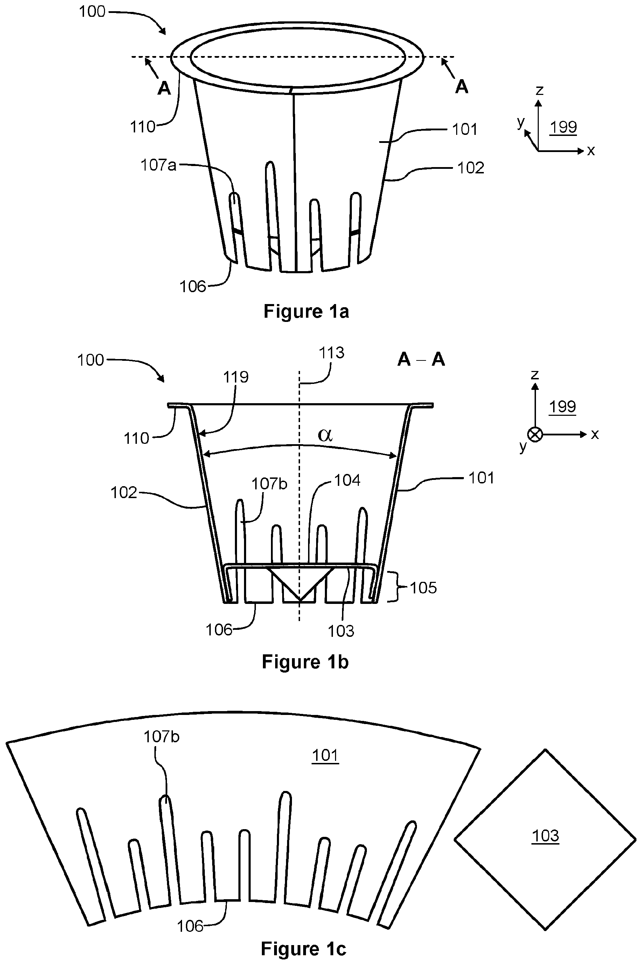

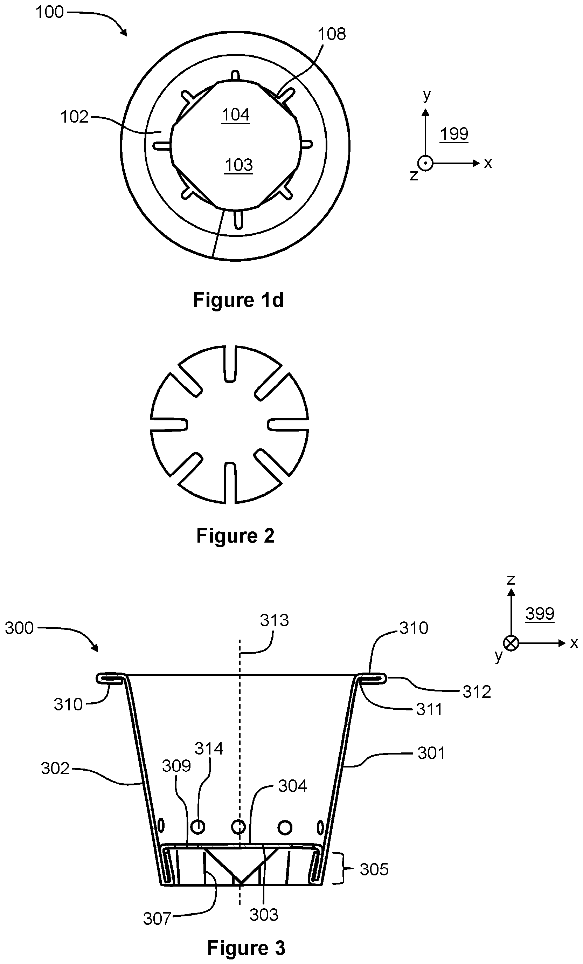

Figure 1a shows a plant cultivation pot 100 according to an exemplifying and non-limiting embodiment. Figure 1b shows a section taken along a line A-A shown in figure 1a. The geometric section plane is parallel with the xz-plane of a coordinate system 199. The plant cultivation pot 100 comprises a first paper fiber board 101 that constitutes a wall portion 102 of the plant cultivation pot. The plant cultivation pot 100 comprises a second paper fiber board 103 that constitutes at least a bottom portion 104 of the plant cultivation pot. The plant cultivation pot 100 comprises a plinth portion 105 so that a part of the wall portion 102 is below the bottom portion 104 in the height direction of the plant cultivation pot, i.e. in the z-direction of the coordinate system 199. Figure 1c shows the first and second paper fiber boards 101 and 103 when they are in a planar form. Figure 1d shows the plant cultivation pot 100 when seen from above.

An outline of a lower edge 106 of the first paper fiber board 101 is provided with cuts extending towards an upper rim of the plant cultivation pot 101 so that the cuts are arranged to extend above the bottom portion 104 of the plant cultivation pot. In figure 1a, one of the cuts is denoted with a reference 107a. In figures 1b and 1c, another one of the cuts is denoted with a reference 107b. As the outline of the lower edge 106 of the first paper fiber board 101 is arranged to have the cuts of the kind mentioned above, there is no need to make holes to the first paper fiber board 101. Thus, amount of loose waste pieces resulting in a manufacturing process of the plant cultivation pot 100 can be reduced. As shown in figures 1a-1d, the cuts do not need to be like each other but each of the cuts may have an individual shape and/or size. In this exemplifying case, some of the cuts are higher than other ones of the cuts.

In the exemplifying plant cultivation pot 100 illustrated in figures 1a-1d, the above-mentioned cuts form passages to the room limited by the plinth portion 105 and the bottom portion 104 when the plant cultivation pot 100 is on a flat surface. The flat surface is not shown in figures 1a-1d. The passages are useful in many cases where the plant cultivation pot is on a surface on which there is a flow of water and/or nutrition solution since the passages reduce the flow resistance caused by the plant cultivation pot.

In the exemplifying plant cultivation pot 100 illustrated in figures 1a-1d, the second paper fiber board 103 has a non-circular shape when being in a planar form, and there are gaps between an outline of the second paper fiber board 103 and the wall portion 102 of the plant cultivation pot 100 when the second paper fiber board is constituting the bottom portion 104. In figure 1d, one of the above-mentioned gaps is denoted with a reference 108. In this exemplifying case, the second paper fiber board 103 has a square shape when being in the planar form - as shown in figure 1c. The non-circular shape of the second paper fiber board 103 makes it possible to arrange openings in the bottom so that there is no need to make holes to the second paper fiber board 103. Thus, amount of loose waste pieces resulting in a manufacturing process of the plant cultivation pot 100 can be reduced. Figure 2 shows another exemplifying non-circular shape for a paper fiber board for constituting a bottom of a plant cultivation pot.

The exemplifying plant cultivation pot 100 illustrated in figures 1a-1d comprises, at the opening of the plant cultivation pot, an extension 110 that is formed by the first paper fiber board 101 and that extends outwards from a geometric center line 113 of the plant cultivation pot 100. The geometric centerline 113 intersects a geometric center point of the bottom portion 104 and a geometric center point of the opening of the plant cultivation pot 100. The extension 110 is advantageously flat in the z-direction of the coordinate system 199 to facilitate an automatized cultivation process where the plant cultivation pot 100 is handled by a machine.

The above-mentioned plinth portion 105 provides a distance between the extensions 110 of successive plant cultivation pots of the kind illustrated in figures 1a-1d when the plant cultivation pots are stacked on top of each other so that the plant cultivation pots are partially nested. The distance between the extensions 110 of the successive plant cultivation pots in the stack can be adjusted by adjusting the height of the plinth portion 105. The sufficient distance between the extensions 110 of successive plant cultivation pots is advantageous in automated plant cultivation processes where a fork element separates each plant cultivation pot from a stack of the plant cultivation pots. Furthermore, in some plant cultivation processes, the plant cultivation pots are stacked after planting or sowing and, in this exemplifying case, the plinth portion of a plant cultivation pot gives room for a sprout to grow under the bottom of another plant cultivation pot stacked on the first mentioned plant cultivation pot.

In the exemplifying plant cultivation pot 100 illustrated in figures 1a-1d, the wall portion is conical 102 and the cone angle of the wall portion 102 is advantageously at least one degree. In figure 1b, the cone angle is denoted with α.

The material or materials of the first and second paper fiber boards 101 and 103 is/are advantageously selected so that there is enough wet strength to enable the plant cultivation pot 100 to function in a cultivation process, and after the cultivation process, the plant cultivation pot 100 does not need to be disposed of but it decomposes and can be mixed with the cultivation medium such as e.g. turf of mold or to the field if the seedings are further grown on a field e.g. on an open air field. In many cases, the decomposed material of the plant cultivation pot 100 can act as soil improvement material to improve soil structure and withhold nutrients.

In a plant cultivation pot according to an exemplifying and non-limiting embodiment, the first paper fiber board 101 comprises sealing material inhibiting water infiltration through the first paper fiber board 101 and correspondingly the second paper fiber board 103 comprises sealing material inhibiting water infiltration through the second paper fiber board 103. In an exemplifying case, the sealing material is arranged to form a coating on a surface of the first paper fiber board 101 so that the coating constitutes an inner surface 119 of the wall portion 102, and the sealing material is arranged to form a coating on a surface of the second paper fiber board 103 so that the coating constitutes an upper surface of the bottom portion 104. In another exemplifying case, the first and second paper fiber boards 101 and 103 are impregnated with the sealing material. In other words, the first and second paper fiber boards 101 and 103 can be e.g. coated and/or impregnated paper fiber boards. The sealing material can be for example wax or some other suitable material for inhibiting water infiltration through the first and second paper fiber boards 101 and 103. Advantageously, the first and second paper fiber boards, including the sealing material, are compostable materials.

In a plant cultivation pot according to another exemplifying and non-limiting embodiment, the second paper fiber board 103 is uncoated and unimpregnated paper fiber board and the first paper fiber board 101 comprises sealing material inhibiting water infiltration through the first paper fiber board 101. As shown by figure 1b, the second paper board 103 is attached to a part of the wall portion 102 that is below the bottom portion 104, and the second paper board 103 constitutes a part of an inner surface of the plinth portion 105 as shown in figure 1b. An advantage of this construction is that water and/or nutrition solution can rise by the capillary effect through the second paper fiber board 103 in the plinth portion 105 and thereby the bottom portion 104 is kept wet. As the second paper board 103 constitutes a significant part of the inner surface of the plinth portion 105, there is a significant surface area through which the water and/or nutrition solution can access the second paper fiber board 103. In some cases, plant cultivation pots of the kind described above are stacked on each other after plants have been planted into the plant cultivations pots. An advantage of the plinth portion 105 is that the plinth portion 105 gives room according to its height for a sprout in a plant cultivation pot that is lower in the stack. Furthermore, the distance between the extensions 110 of successive plant cultivation pots in a stack of plant cultivation pots can be adjusted by adjusting the height of the plinth portion 105. When the plant cultivation pots are handled with machines, it is advantageous that the above-mentioned distance between the extensions 110 of the successive plant cultivation pots in the stack is in a suitable range.

At least a part of a plant cultivation pot according to an exemplifying and non-limiting embodiment is coated or impregnated with one or more growth promoting substances soluble in water. In a plant cultivation pot according to an exemplifying and non-limiting embodiment, at least a part of the first paper fiber board 103 and/or at least a part of the second paper fiber board 103 is/are coated and/or impregnated with one or more nutrients and/or other growth promoting substances soluble in water. When a plant and cultivation medium, e.g. mold or turf, contained by the plant cultivation pot is irrigated, water dissolves the nutrients and/or the other growth promoting substances thus making the nutrients and/or the other growth promoting substances available to the plant, and thereby the growth of the plant is improved.

Figure 3 shows a section view of a plant cultivation pot 300 according to an exemplifying and non-limiting embodiment. The geometric section plane is parallel with the xz-plane of a coordinate system 399. The plant cultivation pot 300 comprises a first paper fiber board 301 that constitutes a wall portion 302 of the plant cultivation pot. The plant cultivation pot 300 comprises a second paper fiber board 303 that constitutes at least a bottom portion 304 of the plant cultivation pot. The plant cultivation pot 300 comprises a plinth portion 305 so that a part of the wall portion 302 is below the bottom portion 304 in the height direction of the plant cultivation pot, i.e. in the z-direction of the coordinate system 399. An outline of a lower edge of the first paper fiber board 301 is provided with cuts extending towards an upper rim of the plant cultivation pot 301. In this exemplifying case, the cuts are slits whose width is very small, nearly zero. In figure 3, one of the cuts is denoted with a reference 307.

In the exemplifying plant cultivation pot 300 illustrated in figure 3, the bottom portion 304 comprises holes. In figure 3, one of the holes is denoted with a reference 309. The holes make it easier for roots of a plant to get through the bottom portion 304, and the holes facilitate flow of water and/or nutrition solution. The holes are advantageously located on a region of the bottom portion 304 where a distance from the geometric center point of the bottom portion 304 is at least 10% of the diameter of the bottom portion 304. In other words, the center area of the bottom portion 304 is free from the holes. In many cases, this is advantageous from the viewpoint of manufacturing because many machines for making paper cups comprise a sucker cup for taking a grip on the center area of the bottom portion. In a case of a non-circular bottom portion, the above-mentioned diameter of the bottom portion can be understood as a distance between two points of the bottom portion that are farthest from each other, e.g. a length of a diagonal of a rectangle in an exemplifying case in which the bottom portion happens to be rectangular.

The exemplifying plant cultivation pot 300 illustrated in figure 3 comprises, at the opening of the plant cultivation pot, an extension 310 formed by the first paper fiber board 301 and extending outwards from a geometric center line 313 of the plant cultivation pot 300. The geometric centerline 313 intersects a geometric center point of the bottom portion 304 and a geometric center point of the opening of the plant cultivation pot 300. In this exemplifying case, the first paper fiber board 301 is two-fold within the extension 310 so that the first paper fiber board is bent, at a border line 311 between the wall portion 302 and the extension 310, outwards from the geometric center line 313 and the first paper fiber board is bent, at an outer rim 312 of the extension, downwards and then towards the geometric center line 313. In an exemplifying plant cultivation pot, the first paper fiber board can be three- or more-fold in the extension at the opening of the plant cultivation pot. It is to be noted that the extension can be made in many ways, and thus the invention is not limited to any specific ways to make the extension. Furthermore, it is to be noted that a plant cultivation pot according to an exemplifying and non-limiting embodiment does not comprise any extension at the opening of the plant cultivation pot.

In the exemplifying plant cultivation pot 300 illustrated in figure 3, the first paper board 301 is bent upwards on a lower rim of the plinth portion 305 and edge areas of the second paper board 303 are between portions of the first paper board 301 in the plinth portion 305.

In the exemplifying plant cultivation pot 300 illustrated in figure 3, the part of the wall portion 302 that is above the bottom portion 304 in the height direction of the plant cultivation pot comprises one or more holes. In figure 3, one of the holes is denoted with a reference 314. It is also possible that the plinth portion 305 comprises one or more holes. It is also possible that there are no holes in the wall portion 302.

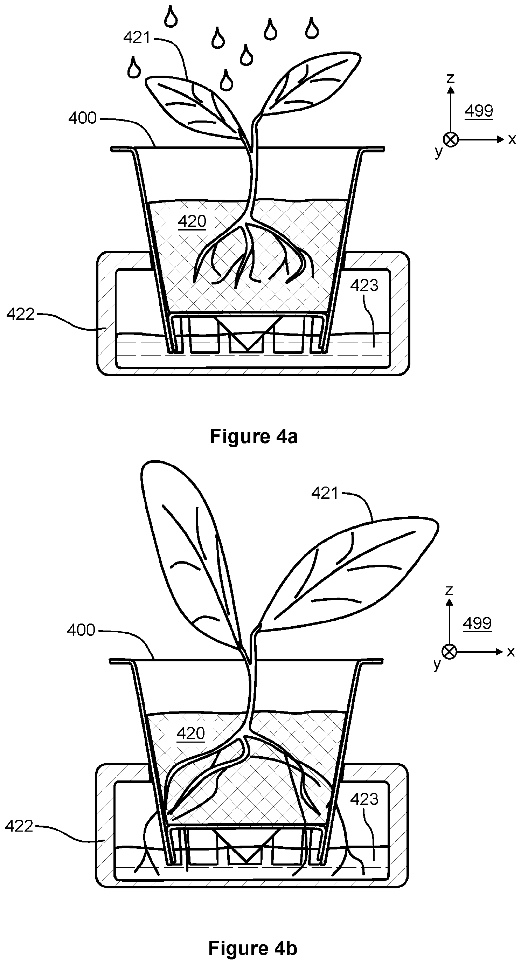

Figures 4a and 4b illustrate a cultivation system according to an exemplifying and non-limiting embodiment. The cultivation system comprises a plant cultivation pot 400 according to an embodiment of the invention. In this exemplifying case, the plant cultivation pot 400 is such as the plant cultivation pot 100 illustrated in figures 1a-1d. The cultivation system comprises cultivation medium 420, e.g. mold or turf, in the interior of the plant cultivation pot 400. The cultivation system comprises a plant 421, e.g. a lettuce, rooted on the cultivation medium 420. In this exemplifying case, the plant 421 is first irrigated from above as shown in figure 4a. As a corollary, the cultivation medium 420 gets wet. In the situation shown in figure 4b, roots of the plant 421 have grown downwards to suck water and/or nutrition solution 423 from a bottom area of a gutter 422. The roots have grown through openings of the plant cultivation pot 400.

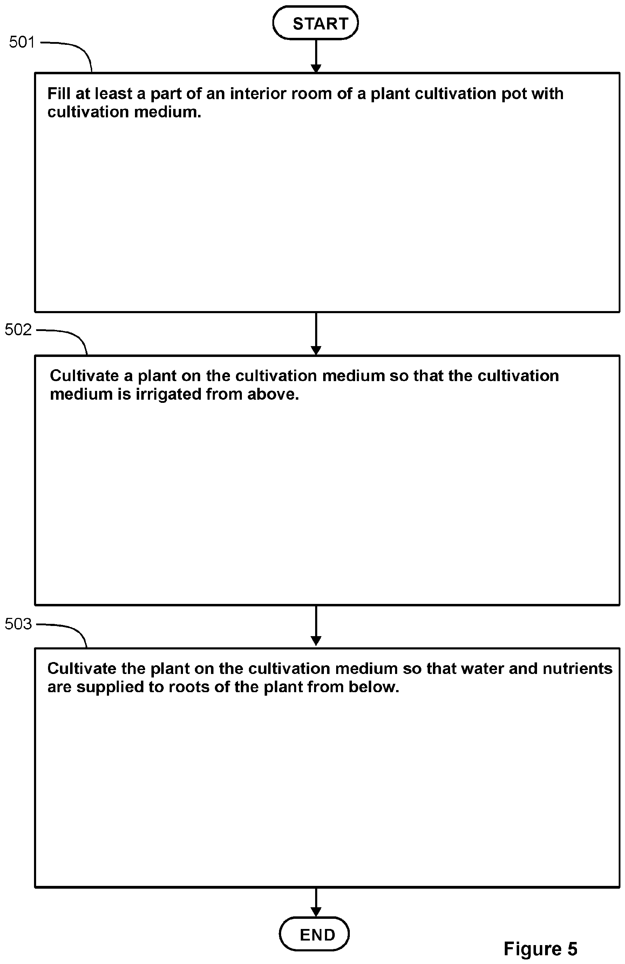

Figure 5 shows a flowchart of a method according to an exemplifying and non-limiting embodiment for cultivating a plant. The method comprises the following actions:
- action 501: filling at least a part of an interior room of a plant cultivation pot according to an embodiment of the invention with cultivation medium,
- action 502: cultivating the plant on the cultivation medium so that the cultivation medium is irrigated from above, and subsequently
- action 503: cultivating the plant on the cultivation medium so that water and nutrients are supplied to roots of the plant from below.

The above-mentioned action 502 corresponds to the situation illustrated in figure 4a, and the above-mentioned action 503 corresponds to the situation illustrated in figure 4b.

A method according to an exemplifying and non-limiting embodiment further comprises mixing the plant cultivation pot with the cultivation medium after a cultivation process of the plant, and subsequently reusing the cultivation medium and decomposed material of the plant cultivation pot in another plant cultivation process.

The specific examples provided in the description given above should not be construed as limiting the applicability and/or interpretation of the appended claims. It is to be noted that lists and groups of examples given in this document are non-exhaustive lists and groups unless otherwise explicitly stated.

## Claims

1. A plant cultivation pot (100, 300, 400) comprising a first paper fiber board (101, 301) constituting a wall portion (102, 302) of the plant cultivation pot and a second paper fiber board (103, 303) constituting a bottom portion (104, 304) of the plant cultivation pot, wherein the plant cultivation pot comprises a plinth portion (105, 305) so that a part of the wall portion is below the bottom portion in a height direction of the plant cultivation pot, **characterized in that** an outline of a lower edge (106) of the first paper fiber board is provided with cuts (107a, 107b, 307) extending towards an upper rim of the plant cultivation pot.

2. A plant cultivation pot according to claim 1, wherein the cuts (107a, 107b) are arranged to extend above the bottom portion (104) of the plant cultivation pot.

3. A plant cultivation pot according to claim 1 or 2, wherein the second paper fiber board (103) has a non-circular shape when being in a planar form, and there are gaps (108) between an outline of the second paper fiber board and the wall portion (102) of the plant cultivation pot when the second paper fiber board is constituting the bottom portion (104).

4. A plant cultivation pot according to any one of claims 1-3, wherein the bottom portion (304) comprises one or more holes (309).

5. A plant cultivation pot according to claim 4, wherein the one or more holes are located on a region of the bottom portion where a distance from a geometric center point of the bottom portion is at least 10% of a diameter of the bottom portion.

6. A plant cultivation pot according to any one of claims 1-5, wherein the plant cultivation pot comprises, at an opening of the plant cultivation pot, an extension (110, 310) formed by the first paper fiber board and extending outwards from a geometric center line of the plant cultivation pot, the geometric centerline intersecting a geometric center point of the bottom portion and a geometric center point of the opening of the plant cultivation pot.

7. A plant cultivation pot according to claim 6, wherein the first paper fiber board is at least two-fold within the extension (310) so that the first paper fiber board is bent, at a border line (311) between the wall portion and the extension, outwards from the geometric center line and the first paper fiber board is bent, at an outer rim (312) of the extension, downwards and then towards the geometric center line.

8. A plant cultivation pot according to any one of claims 1-7, wherein the second paper board (103) is attached to the part of the wall portion that is below the bottom portion and the second paper board constitutes at least a part of an inner surface of the plinth portion (105).

9. A plant cultivation pot according to any one of claims 1-7, wherein the first paper board (301) is bent upwards on a lower rim of the plinth portion (305) and edge areas of the second paper board (303) are between portions of the first paper board in the plinth portion.

10. A plant cultivation pot according to any one of claims 1-9, wherein the first paper fiber board comprises sealing material inhibiting water infiltration through the first paper fiber board and the second paper fiber board comprises sealing material inhibiting water infiltration through the second paper fiber board.

11. A plant cultivation pot according to any one of claims 1-9, wherein the second paper fiber board (103) is uncoated and unimpregnated paper fiber board and the first paper fiber board (101) comprises sealing material inhibiting water infiltration through the first paper fiber board.

12. A plant cultivation pot according to any one of claims 1-11, wherein a part of the wall portion that is above the bottom portion in the height direction of the plant cultivation pot comprises one or more holes (314).

13. A plant cultivation pot according to any one of claims 1-12, wherein at least a part of the plant cultivation pot is coated or impregnated with one or more growth promoting substances soluble in water.

14. A cultivation system comprising:
- a plant cultivation pot (400) according to any one of claims 1-13,
- cultivation medium (420) in an interior of the plant cultivation pot, and
- a plant (421) rooted on the cultivation medium.

15. A method for cultivating a plant, the method comprising:
- filling (501) at least a part of an interior room of a plant cultivation pot (200) according to any one of claims 1-13 with cultivation medium,
- cultivating (502) the plant on the cultivation medium so that the cultivation medium is irrigated from above, and subsequently
- cultivating (503) the plant on the cultivation medium so that water and nutrients are supplied to roots of the plant from below.

16. A method according to claim 15, wherein the method further comprises mixing the plant cultivation pot with the cultivation medium after a cultivation process of the plant, and subsequently reusing the cultivation medium and decomposed material of the plant cultivation pot in another plant cultivation process.
